(19) Europäisches Patentamt / European Patent Office / Office européen des brevets

(11) **EP 4 641 692 A1**

(12) **EUROPEAN PATENT APPLICATION**

(43) Date of publication:
**29.10.2025 Bulletin 2025/44**

(21) Application number: **25168828.9**

(22) Date of filing: **07.04.2025**

(51) International Patent Classification (IPC):
**H01M 4/587** (2010.01)    **H01M 10/052** (2010.01)

(52) Cooperative Patent Classification (CPC):
**H01M 4/587; H01M 10/052**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **22.04.2024  KR 20240053537**

(71) Applicant: SAMSUNG SDI CO., LTD.
**Yongin-si, Gyeonggi-do 17084 (KR)**

(72) Inventors:
• **KIM, Young-Ki**
 **Yongin-si, Gyeonggi-do 17084 (KR)**
• **CHOI, Aram**
 **Yongin-si, Gyeonggi-do 17084 (KR)**
• **KIM, Sangmi**
 **Yongin-si, Gyeonggi-do 17084 (KR)**
• **DOO, Sungwook**
 **Yongin-si, Gyeonggi-do 17084 (KR)**
• **KANG, Gwiwoon**
 **Yongin-si, Gyeonggi-do 17084 (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, POSITIVE ELECTRODE CONTAINING THE SAME, AND RECHARGEABLE LITHIUM BATTERY INCLUDING THE SAME**

(57)    A positive electrode active material, a method of preparing the positive electrode active material, a positive electrode including the positive electrode active material, and a rechargeable lithium battery including the positive electrode are disclosed. The positive electrode active material includes a first particle containing a compound represented by Formula 1 and having a first average particle diameter, wherein, in Formula 1, $1 < z/b < 5$ is satisfied:

Formula 1        $Li_a Fe_x Mg_y Ti_z V_b PO_{4-c}$

where, in Formula 1, $0.8 < a \leq 1.2$, $0.850 \leq x \leq 0.997$, $0.001 \leq y \leq 0.05$, $0.001 \leq z \leq 0.05$, $0 \leq b \leq 0.05$, $0 \leq c \leq 0.05$, and $x + y + z + b = 1$.

FIG. 6

EP 4 641 692 A1

**Description**

**BACKGROUND**

One or more embodiments of the present disclosure relate to a positive electrode active material for a rechargeable lithium battery, a positive electrode including the positive electrode active material, and a rechargeable lithium battery including the positive electrode active material, and, for example, to a positive electrode active material including an olivine-based lithium compound, a positive electrode including the positive electrode active material, and a rechargeable lithium battery including the positive electrode active material.

With the rapid spread of battery-utilizing electronic devices, such as mobile phones and laptop computers, and electric vehicles, it is desirable to develop a rechargeable lithium battery having high energy density and high capacity (e.g., electrical capacity). Research and development have been conducted to improve or enhance performance of the rechargeable lithium battery.

The rechargeable lithium battery includes a positive electrode and a negative electrode, that contain an active material capable of intercalation and deintercalation of lithium ions, and an electrolyte solution. Electrical energy is produced by oxidation and reduction reactions if (e.g., when) the lithium ions are intercalated and deintercalated into/from the positive electrode and the negative electrode.

**SUMMARY**

One or more aspects of embodiments of the present disclosure are directed toward a positive electrode active material having high energy density, high operating voltage, and high conductivity (e.g., electrical conductivity) and a positive electrode including the positive electrode active material.

One or more aspects of embodiments of the present disclosure are directed toward a rechargeable lithium battery having high energy density, high operating voltage, high charge-discharge efficiency, improved or enhanced low-temperature characteristics, and long lifespan.

One or more aspects of embodiments of the present disclosure are directed toward a positive electrode active material including a first particle containing a compound represented by Formula 1 and having a first average particle diameter, wherein, in Formula 1, $1 < z/b < 5$ is satisfied:

$$\text{Formula 1} \qquad Li_aFe_xMg_yTi_zV_bPO_{4-c}$$

In Formula 1, $0.8 < a \leq 1.2$, $0.850 \leq x \leq 0.997$, $0.001 \leq y \leq 0.05$, $0.001 \leq z \leq 0.05$, $0 \leq b \leq 0.05$, $0 \leq c \leq 0.05$, and $x + y + z + b = 1$.

One or more aspects of embodiments of the present disclosure are directed toward a positive electrode for a rechargeable lithium battery including a positive electrode current collector and a positive electrode active material layer on the positive electrode current collector, and the positive electrode active material layer includes the positive electrode active material according to one or more embodiments of the present disclosure, a conductive (e.g., electrically conductive) material, and/or a binder.

One or more aspects of embodiments of the present disclosure are directed toward a rechargeable lithium battery including a positive electrode, a negative electrode, a separator, and/or an electrolyte solution, and the positive electrode includes the positive electrode active material according to one or more embodiments.

At least some of the above and other features of the invention are set out in the claims.

**BRIEF DESCRIPTION OF THE DRAWINGS**

The accompanying drawings are included to provide a further understanding of embodiments of the subject matter of the present disclosure and are incorporated in and constitute a part of this specification. The drawings illustrate embodiments of the subject matter of the present disclosure and, together with the description, serve to explain principles of embodiments of subject matter of the present disclosure. In the drawings:

FIG. 1 is a simplified conceptual diagram illustrating a rechargeable lithium battery according to one or more embodiments of the present disclosure;

FIGS. 2-5 each is a schematic view illustrating a rechargeable lithium battery according to one or more embodiments, FIG. 2 illustrates a cylindrical battery, FIG. 3 illustrates a prismatic battery, and FIGS. 4-5 each illustrate a pouch-type or -kind battery;

FIGS. 6-7 each is an enlarged view illustrating a positive electrode active material layer of a rechargeable lithium battery according to one or more embodiments of the present disclosure;

FIG. 8 is a flowchart illustrating a preparation method of a positive electrode active material according to one or more embodiments of the present disclosure; and

FIGS. 9-10 each is a scanning electron microscope (SEM) image of a positive electrode active material according to one or more embodiments of the present disclosure.

**DETAILED DESCRIPTION**

In order to fully understand the aspects and features of the present disclosure, the subject matter of the present disclosure will be described below in more detail with reference to the accompanying drawings. The subject matter of the present disclosure may, however, be embodied in one or more forms and should not be construed as being limited to one or more embodiments set forth herein, and one or more changes and modifications can be made. Rather, these embodiments are provided as examples so that this disclosure will be thorough and complete, and will fully convey the aspects and features of the present disclosure to those skilled in the art to which the present disclosure pertains.

As utilized herein, the singular forms "a," "an," and "the" are intended to include the plural forms as well, unless the context clearly indicates otherwise. Further, the utilization of "may" if (e.g., when) describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree, and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within $\pm 30\%$, $\pm 20\%$, $\pm 10\%$, or $\pm 5\%$ of the stated value.

As used herein, it will be understood that, if (e.g., when) an element is referred to as being "on" another element, the element may be directly on the other element or intervening elements may be present therebetween. In contrast, if (e.g., when) an element is referred to as being "directly on" another element, there are no intervening elements present.

Like reference numerals or symbols refer to like elements throughout the specification.

One or more embodiments described herein will be illustrated with reference to cross-sectional views and/or plan views, which may be ideal illustrations of the present disclosure. In the drawings, thicknesses of films, regions, or components may be exaggerated to effectively or suitably illustrate the technical contents. In one or more embodiments, the regions illustrated in the drawings may have schematic properties, and the shapes of the regions illustrated in the drawings may be intended to illustrate a set or specific shape of the regions of an element and are not intended to limit the scope of the present disclosure.

In one or more embodiments of the present disclosure, the terms, such as first, second, and third, are used to describe one or more components, but these components should not be limited by these terms. These terms may be used to distinguish one component from another. One or more embodiments described and illustrated herein may also include complementary embodiments thereof.

The terminology used herein is to describe one or more embodiments of the present disclosure and is not intended to limit the present disclosure. As used herein, the singular forms are intended to include the plural forms as well, unless the context clearly indicates otherwise. The terms "comprises/includes" and/or "comprising/including" used in the present disclosure do not exclude the presence or addition of one or more other components.

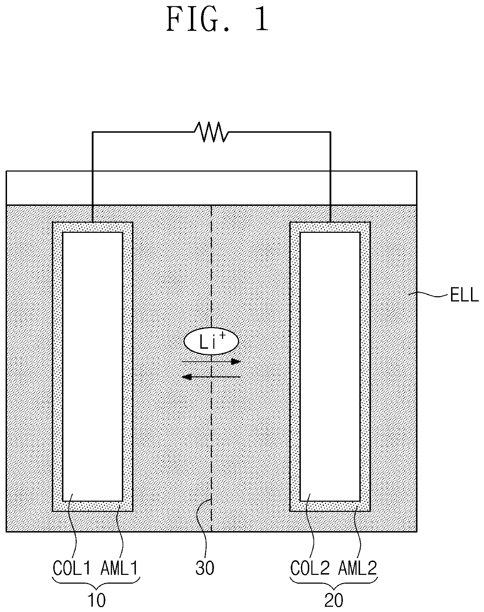

FIG. 1 is a simplified conceptual diagram illustrating a rechargeable lithium battery according to one or more embodiments of the present disclosure. Referring to FIG. 1, the rechargeable lithium battery may include a positive electrode 10, a negative electrode 20, a separator 30, and/or an electrolyte solution ELL.

The positive electrode 10 and the negative electrode 20 may be spaced and/or apart (e.g., spaced apart or separated) from each other with the separator 30 therebetween. The separator 30 may be between the positive electrode 10 and the negative electrode 20. The positive electrode 10, the negative electrode 20, and/or the separator 30 may be in contact with the electrolyte solution ELL. The positive electrode 10, the negative electrode 20, and/or the separator 30 may be impregnated in the electrolyte solution ELL.

The electrolyte solution ELL may be a medium to transfer lithium ions between the positive electrode 10 and the negative electrode 20. In the electrolyte solution ELL, the lithium ions may move through the separator 30 toward the positive electrode 10 and/or the negative electrode 20.

**Positive Electrode 10**

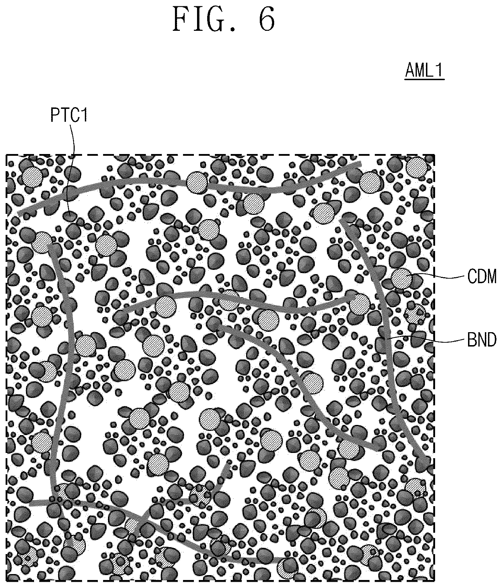

The positive electrode 10 for a rechargeable lithium battery includes a current collector COL1 and a positive electrode active material layer AML1 on the current collector COL1. The positive electrode active material layer AML1 may include a positive electrode active material and may further include a binder and/or a conductive (e.g., electrically conductive) material. The positive electrode active material layer AML1 according to one or more embodiments of the present disclosure will be described in more detail with reference to FIGS. 6-7. Aluminium (Al) may be utilized as the current collector COL1, but is not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive (e.g., electrically conductive) material.

For example, the negative electrode active material layer AML2 may include about 90 wt% to about 99 wt% of the negative electrode active material, about 0.5 wt% to about 5 wt% of the binder, and/or about 0 wt% to about 5 wt% of the conductive (e.g., electrically conductive) material.

The binder may serve (or may be provided) to attach or couple the negative electrode active material particles well or suitably to each other and/or to attach or couple the negative electrode active material well or suitably to the current collector COL2. The binder may include a non-aqueous (e.g., water-insoluble) binder, an aqueous (e.g., water-soluble) binder, a dry binder, or a combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous (e.g., water-soluble) binder may be selected from among a styrene-butadiene rubber, a (meth) acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous (e.g., water-soluble) binder is utilized as the negative electrode binder, a cellulose-based compound capable of imparting or increasing viscosity may be further included. The cellulose-based compound may include at least one selected from among carboxymethyl cellulose, hydroxypropyl methylcellulose, methyl cellulose, and/or an alkali metal salt thereof. The alkali metal may include sodium (Na), potassium (K), and/or lithium (Li).

The dry binder may be a polymer material that is capable of being fibrous (e.g., that may be processed to become fibrous). For example, the dry binder may be polytetrafluoroethylene, polyvinylidene fluoride, a polyvinylidene fluoride-hexafluoropropylene copolymer, polyethylene oxide, or a combination thereof.

The conductive (e.g., electrically conductive) material may be utilized to impart or provide conductivity (e.g., electrical conductivity) to the electrode. Any suitable material that does not cause chemical change (e.g., does not cause an undesirable chemical change in the rechargeable lithium battery) and that conducts electrons may be utilized in the rechargeable lithium battery. Non-limiting examples thereof may include a carbon-based material, such as natural graphite, artificial graphite, carbon black, acetylene black, ketjen black, a carbon fiber, a carbon nanofiber, and/or a carbon nanotube; a metal-based material including copper, nickel, aluminium, silver, and/or the like in a form of a metal powder and/or a metal fiber; a conductive (e.g., electrically conductive) polymer, such as polyphenylene and/or a derivative thereof; or a mixture thereof.

The negative current collector COL2 may include a copper foil, a nickel foil, a stainless-steel foil, a titanium foil, a nickel foam, a copper foam, a polymer substrate coated with a conductive (e.g., electrically conductive) metal, or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous (e.g., non-crystalline) carbon, or a combination thereof. The crystalline carbon may be graphite, such as non-shaped (e.g., substantially irregular), sheet-shaped (e.g., substantially sheet-shaped), flake-shaped (e.g., substantially flake-shaped), sphere-shaped (e.g., substantially sphere-shaped), and/or fiber-shaped (e.g., substantially fiber-shaped) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among Na, K, rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), Al, and tin (Sn).

The material capable of doping/dedoping lithium may be a Si-based negative electrode active material and/or a Sn-based negative electrode active material. The Si-based negative electrode active material may include silicon, a silicon-carbon composite, $SiOx$ ($0 < x \leq 2$), a Si-Q alloy (where Q may be selected from among an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnOk$ ($0 < k \leq 2$) (e.g., $SnO_2$), a Sn-based alloy, or a combination thereof.

The silicon-carbon composite may be a composite of silicon and amorphous (e.g., non-crystalline) carbon. According to one or more embodiments, the silicon-carbon composite may be in a form of silicon particles and amorphous (e.g., non-crystalline) carbon coated on the surface of the silicon particles. For example, the silicon-carbon composite may include a secondary particle (e.g., core) in which primary silicon particles are assembled, and an amorphous (e.g., non-crystalline) carbon coating layer (e.g., shell) on the surface of the secondary particle. The amorphous (e.g., non-crystalline) carbon may also be between the primary silicon particles, and, for example, the primary silicon particles may be coated with the amorphous (e.g., non-crystalline) carbon. The secondary particle may exist dispersed or provided in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core.

The Si-based negative electrode active material and/or the Sn-based negative electrode active material may be utilized in combination with a carbon-based negative electrode active material.

**Separator 30**

Depending on the type or kind of the rechargeable lithium battery, the separator 30 may be between the positive electrode 10 and the negative electrode 20. The separator 30 may include polyethylene, polypropylene, polyvinylidene fluoride, or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and/or a coating layer including an organic material, an inorganic material, or a combination thereof on one surface or both surfaces (e.g., two opposing surfaces) of the porous substrate.

The porous substrate may be a polymer film of any one selected from among polyolefin, such as polyethylene and polypropylene, polyester, such as polyethylene terephthalate and polybutylene terephthalate, polyacetal, polyamide, polyimide, polycarbonate, polyether ketone, polyaryletherketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (Teflon™), or a copolymer or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, Mg $(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous (e.g., water-insoluble) organic solvent and/or a lithium salt.

The non-aqueous (e.g., water-insoluble) organic solvent may serve as a medium to transmit ions taking part in the electrochemical reaction of a rechargeable lithium battery.

The non-aqueous (e.g., water-insoluble) organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, an ether bond), and/or the like; amides, such as dimethylformamide; dioxolanes, such as 1,3-dioxolane, 1,4-dioxolane, and/or the like; sulfolanes, and/or the like.

The non-aqueous (e.g., water-insoluble) organic solvents may be used alone or in combination of two or more.

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent may supply or provide lithium ions in a rechargeable lithium battery, enable a basic operation of a rechargeable lithium battery, and improve or enhance transportation of the lithium ions between the positive electrode and the negative electrode. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

**Rechargeable Lithium Battery**

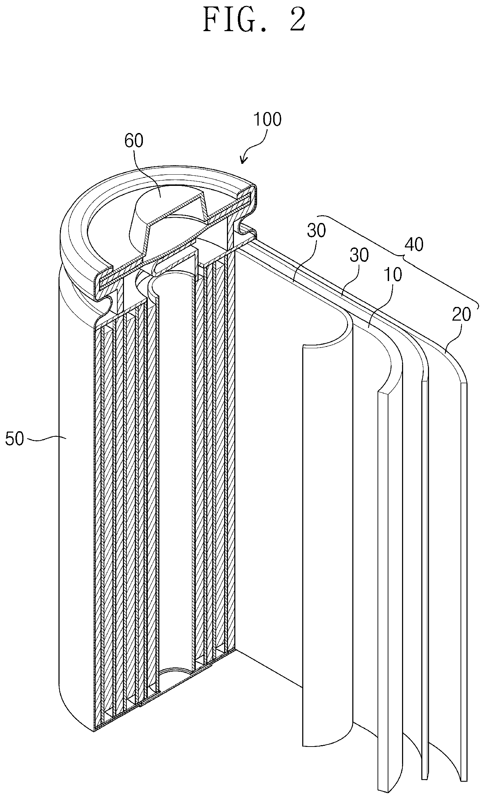

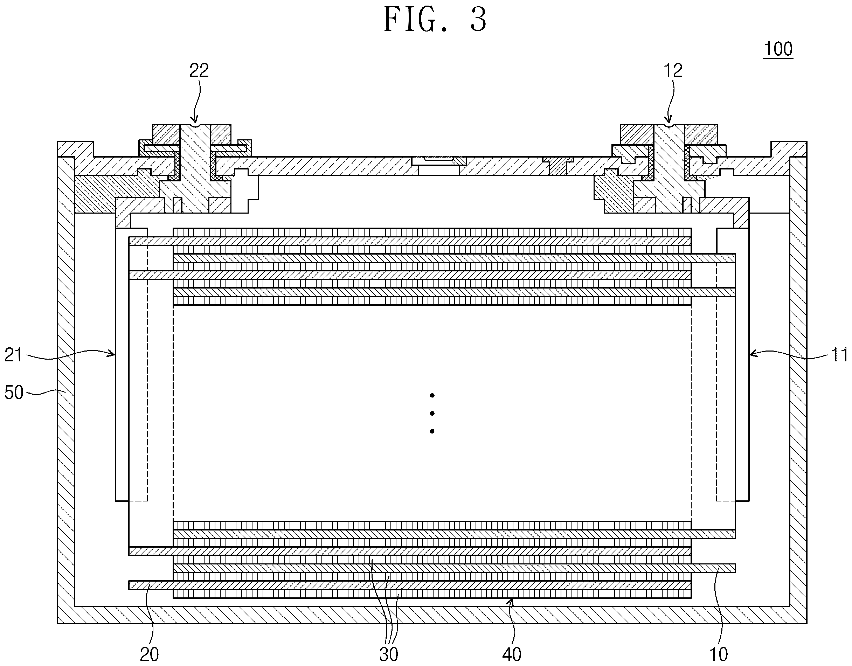

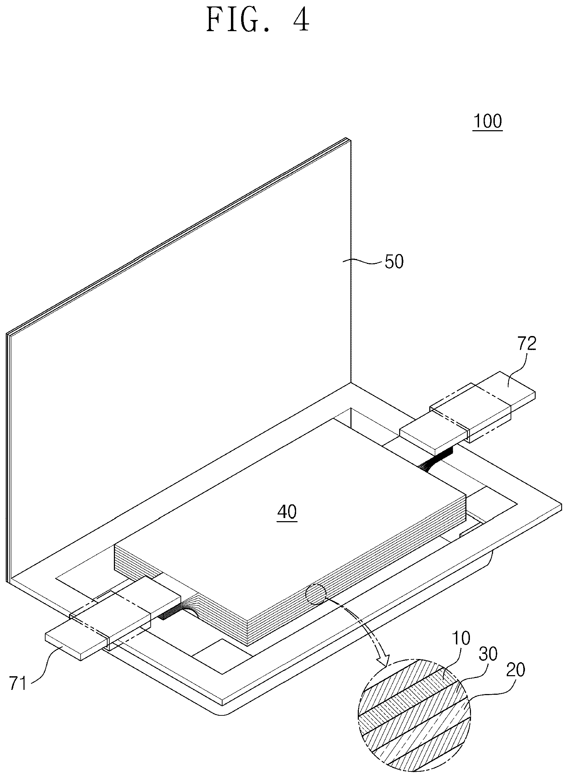

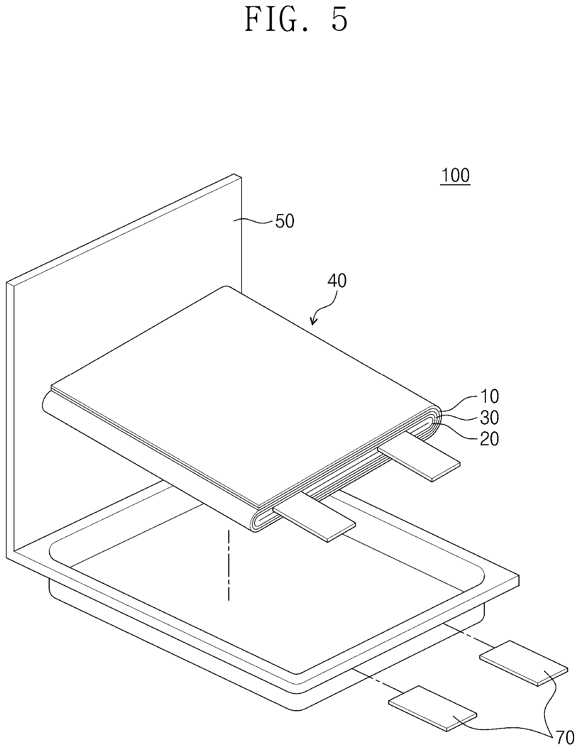

The rechargeable lithium battery may be classified into cylindrical, prismatic, pouch, coin-type or -kind batteries, and/or the like depending on their shape. FIGS. 2-5 each is a schematic view illustrating a rechargeable lithium battery according to one or more embodiments. FIG. 2 illustrates a cylindrical battery, FIG. 3 illustrates a prismatic battery, and FIGS. 4-5 each illustrates a pouch-type or -kind battery. Referring to FIGS. 2-5, the rechargeable lithium battery 100 may include an electrode assembly 40 including a separator 30 between a positive electrode 10 and a negative electrode 20 and/or a case 50 in which the electrode assembly 40 is included. The positive electrode 10, the negative electrode 20, and/or the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive lead tab 11, a positive terminal 12, a negative lead tab 21, and/or a negative terminal 22. As shown in FIGS. 4-5, the rechargeable lithium battery 100 may include an electrode tab 70, which may be, for example, a positive electrode tab 71 and/or a negative electrode tab 72 serving as an electrical path to include the current in the electrode assembly 40 to the outside.

The rechargeable lithium battery according to one or more embodiments may be applied to automobiles, mobile phones, and/or one or more suitable types or kinds of electric devices, as non-limiting examples.

FIGS. 6-7 each is an enlarged view of a positive electrode active material layer of a rechargeable lithium battery according to one or more embodiments of the present disclosure. Referring to FIGS. 6-7, the positive electrode active material layer AML1 (see FIG. 1) may include a first particle PTC1, a conductive (e.g., electrically conductive) material CDM, and/or a binder BND. A plurality of first particles PTC1 constitute a positive electrode active material according to one or more embodiments of the present disclosure.

The positive electrode active material layer AML1 may further include an additive that may serve as a sacrificial positive electrode.

An amount of the positive electrode active material PTC1 in the positive electrode active material layer AML1 may be about 90 wt% to about 99.5 wt% based on 100 wt% of the positive electrode active material layer AML1. An amount of each of the binder BND and the conductive (e.g., electrically conductive) material CDM may be about 0.5 wt% to about 5 wt% based on 100 wt% of the positive electrode active material layer AML1.

The binder BND may bond or couple the first particle PTC1 and the conductive (e.g., electrically conductive) material CDM to each other. For example, the binder BND may include at least one selected from the group consisting of polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive (e.g., electrically conductive) material CDM may be utilized to improve or enhance conductivity (e.g., electrical conductivity) of the positive electrode active material layer AML1. Any suitable conductive (e.g., electrically conductive) material that does not cause chemical changes (e.g., does not cause undesirable chemical changes) of the positive electrode active material layer AML1 may be utilized, without limitation, as the conductive (e.g., electrically conductive) material CDM. Examples of the conductive (e.g., electrically conductive) material CDM may include a carbon-based material, such as natural graphite, artificial graphite, carbon black, acetylene black, ketjen black, a carbon fiber, a carbon nanofiber, and/or carbon nanotube; a metal-based material containing copper, nickel, aluminium, silver, and/or the like, in a form of a metal powder and/or a metal fiber; a conductive (e.g., electrically conductive) polymer, such as polyphenylene and/or a derivative thereof; or a mixture thereof.

Hereinafter, the first particle PTC1 will be described in more detail.

**First Particle PTC1**

The first particle PTC1 may include an olivine-based lithium compound represented by Formula 1.

Formula 1 $\quad\quad\quad Li_aFe_xMg_yTi_zV_bPO_{4-c}$

In Formula 1, $0.8<a\leq1.2$, $0.850\leq x\leq0.997$, $0.001\leq y\leq0.05$, $0.001\leq z\leq0.05$, $0\leq b\leq0.05$, $0\leq c\leq0.05$, and $x+y+z+b=1$ are satisfied. Magnesium (Mg), titanium (Ti), and vanadium (V) are dopants doped into the first particle PTC1. For example, y may be about 0.002 to about 0.003, z may be about 0.0035 to about 0.0045, and b may be about 0.001 to about 0.005, or about 0.001 to about 0.003.

According to one or more embodiments of the present disclosure, if (e.g., when) a combination of Mg, Ti, and V is used as a dopant of the first particle PTC1, compared with using any one among Mg, Ti, and V (for example, Ti may be used alone) or using any two thereof (for example, Ti and V may be used), the structure of the positive electrode active material may be strengthened or enhanced, and the sizes of primary particles may be suitably adjusted to be uniform (e.g., substantially uniform), and at the same time, charge-discharge efficiency and low-temperature and lifespan characteristics of the rechargeable lithium battery may be further improved or enhanced. The primary particle will be described in more detail as follows.

The total doping amount of Mg, Ti, and V may be about 1500 ppm to about 3600 ppm or about 3000 ppm to about 3600 ppm. For example, the doping amount of Mg may be about 600 ppm, the doping amount of Ti may be about 1000 ppm to about 2000 ppm, and the doping amount of V may be about 500 ppm to about 1000 ppm. The doping amount may be defined as the weight of a doping element to the total weight of metals excluding lithium (e.g., Fe, Mg, Ti, and V) of the olivine-based lithium compound represented by Formula 1.

In Formula 1, $z>b$ satisfied. For example, the amount of moles of doped Ti is greater than the amount of moles of doped V. For example, $z/b>1$, $1<z/b<5$, $2\leq z/b\leq4$, or $2\leq z/b<4$ may be satisfied. For example, b may be at least about 0.002. For example, b may be about 0.002 to about 0.05.

In Formula 1, $y>b$ may be satisfied. For example, the number of moles of doped Mg may be greater than the number of moles of doped V. For example, $y/b>1$, $1<y/b<3$, $1\leq y/b\leq2.5$, $1\leq y/b<2.5$ or $1.25\leq y/b<2.5$ may be satisfied. For example, b may be at least about 0.002. For example, b may be about 0.002 to about 0.05.

In Formula 1, $(y+z)>b$ may be satisfied. For example, the total number of moles of doped Mg and doped Ti may be greater than the number of moles of doped V. For example, $(y+z)/b>1.5$, $1.5<(y+z)/b<8$, $2.6\leq(y+z)/b\leq6.5$, or $2.6\leq(y+z)/b<6.5$ may be satisfied. For example, b may be at least about 0.002. For example, b may be about 0.002 to about 0.05.

In Formula 1, $z/y>0.5$ may be satisfied. For example, in Formula 1, $1<z/y<5$, $0.5<z/y<3.2$, $0.5<z/y<2$, $0.5<z/y<1$, or $1<z/y<2$ may be satisfied.

If (e.g., when) the values of z/b, y/b, (y + z)/b, and/or z/y fall within the foregoing ranges, respectively, the structure of the positive electrode active material may be strengthened or enhanced, the sizes of the primary particles may be adjusted to be uniform (e.g., substantially uniform), and, at the same time, the charge-discharge efficiency and the low-temperature and lifespan characteristics of the rechargeable lithium battery may further be improved or enhanced.

In Formula 1, the average oxidation number of Mg and Ti may satisfy Expression 1 (which may also be referred to as "Relation 1").

Expression 1

$$2.5<(y\times2+z\times4)/(y+z)<3.5$$

For example, the average oxidation number of Mg and Ti may be $2.5<(y\times2+z\times4)/(y+z)<3$ or $3<(y\times2+z\times4)/(y+z)<3.5$. For example, if (e.g., when) the first particle PTC1 is a single particle to be described as follows, $3<(y\times2+z\times4)/(y+z)<3.5$ may be satisfied. For example, if (e.g., when) the first particle is a secondary particle to be described as follows, $2.5<(y\times2+z\times4)/(y+z)<3.5$ may be satisfied. If (e.g., when) the result value of Expression 1 falls within the foregoing ranges, the charge-discharge efficiency and the low-temperature and lifespan characteristics of the rechargeable lithium battery may be improved or enhanced.

In one or more embodiments, the first particle PTC1 may include a coating layer on a surface thereof. The coating layer may cover the entire surface of the first particle PTC1 or may cover a portion of the surface of the first particle PTC1. For example, the coating layer may include carbon and/or a carbon-containing compound. The first particle PTC1 may have improved or enhanced structural stability and electrical conductivity due to the coating layer.

The coating layer may further include at least one selected from the group consisting of a titanium-containing compound, a magnesium-containing compound, and a vanadium-containing compound. A metal-containing compound, such as the titanium-containing compound, the magnesium-containing compound, and/or the vanadium-containing compound, may be, for example, a metal oxide, a metal hydroxide, a metal carbonate, or a composite or mixture thereof. The metal-containing compound may further include another metal and/or non-metal element. For example, the metal-containing compound may further include lithium.

The first particle PTC1 may further include carbon derived from the coating layer as described in one or more embodiments and/or grain boundary coating layer. An amount of a carbon element in the first particle PTC1 may be about 0.5 wt% to about 10 wt%, about 1 wt% to about 3 wt%, or about 1.5 wt% to about 2.5 wt%.

Because the positive electrode active material according to one or more embodiments of the present disclosure includes the first particle PTC1, pellet density, capacity (e.g., electrical capacity), and/or energy density may be improved or enhanced. In one or more embodiments, the pellet density of the positive electrode active material according to one or more embodiments of the present disclosure may be about 2.0 g/cc to about 2.5 g/cc or about 2.4 g/cc to about 2.5 g/cc.

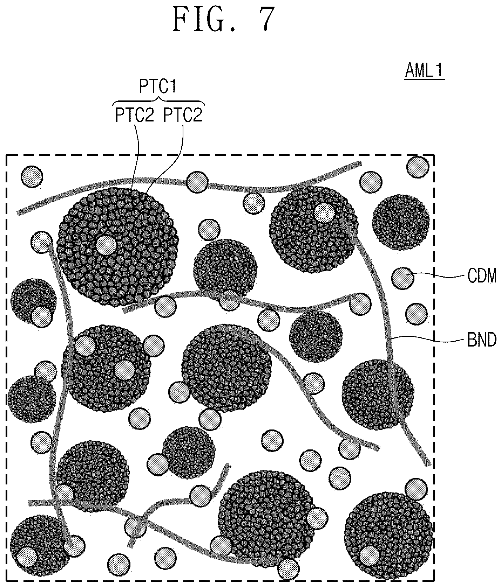

The first particle PTC1 has a first average particle diameter. The first average particle diameter may vary (or may be different) according to FIG. 6 and/or FIG. 7.

In one or more embodiments, referring to FIG. 6, the first particle PTC1 may have a single particle form. In one or more embodiments, the single particle may refer to one particle that exists alone without a grain boundary therein. With respect to morphology, the single particle may refer to one particle, a monolith structure, a single unitary structure, and/or a non-aggregated particle, existing as an independent phase in which particles do not aggregate with each other. For example, the single particle may be a single crystal. In one or more embodiments, the single particle may be a particle containing a few crystals. The single particle may be independently separated. In one or more embodiments, the single particle may be in a form of having about 2 to about 100 single particles bonded or coupled to each other. For example, the first particle PTC1 may be provided in one or more sizes. For example, the first particle PTC1 may have an average particle diameter of about 500 nm to about 2.5 $\mu$m, for example, about 1 $\mu$m. The minimum particle diameter of the first particle PTC1 may be about 100 nm to about 500 nm or about 200 nm to about 300 nm. For example, the minimum particle diameter may refer to a value obtained by measuring diameters of about 30 primary particles (hereinafter, first primary particle) randomly selected from an electron micrograph of a positive electrode active material. Hereinafter, the average particle diameter of the first particle PTC1 will be described in more detail.

If (e.g., when) the first particle PTC1 is a single particle, the average particle diameter of the first particle PTC1 may be about 500 nm to about 2.5 $\mu$m. For example, the average particle diameter of the first particle PTC1 may be about 1 $\mu$m. In one or more embodiments, the average particle diameter may be measured using a particle size analyzer. The average particle diameter may refer to a diameter (D50) of particles at a cumulative volume of about 50 vol% in a particle size distribution.

In one or more embodiments, referring to FIG. 7, the first particle PTC1 may be in a form of polycrystal and may include a secondary particle in which at least two primary particles are aggregated. For example, one first particle PTC1 may include a plurality of second particles PTC2 that are aggregated with each other. The plurality of second particles PTC2 may each be a primary particle. The first particle PTC1 may have a sphere (e.g., substantially sphere) or oval (e.g., substantially oval) shape.

In one or more embodiments, the first particle PTC1 may further include a grain boundary coating layer on surfaces of the plurality of second particles PTC2. The grain boundary coating layer may be inside the first particle PTC1. The grain boundary coating layer may be formed or provided by coating the plurality of second particles PTC2 along an interface therebetween inside the first particle PTC1. For example, the grain boundary coating layer may refer to a material which the grain boundary inside the first particle PTC1 is coated with. The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the first particle PTC1 may refer to an entire inner portion of the first particle PTC1 except the surface of the first particle PTC1. For example, the inside of the first particle PTC1 may refer to an entire inner region from about 10 nm depth from the surface of the first particle PTC1 or a region from about 10 nm depth to about 2 $\mu$m depth.

Because the first particle PTC1 may further include a grain boundary coating part, structural stability may be strengthened or enhanced, and a coating layer may be formed or provided uniformly (e.g., substantially uniformly) on the surface of the first particle PTC1. In one or more embodiments, because the first particle PTC1 may further include the grain boundary coating part, the electrical conductivity of the first particle PTC1 may be further improved or enhanced.

If (e.g., when) the first particle PTC1 is a secondary particle, the average particle diameter of the first particle PTC1 may be about 2 $\mu$m to about 15 $\mu$m, about 3 $\mu$m to about 10 $\mu$m, or about 3 $\mu$m to about 7 $\mu$m. For example, the average particle diameter of the first particle PTC1 may be about 5 $\mu$m. The average particle diameter of the first particle PTC1 may be larger than the average particle diameter of the second particle PTC2, which will be further described herein. In one or more embodiments, the average particle diameter may be measured using a particle size analyzer. The average particle diameter may refer to a diameter (D50) of particles at a cumulative volume of about 50 vol% in a particle size distribution.

The second particle PTC2 may have a particle diameter of about 200 nm or less. For example, the particle diameter of the second particle PTC2 may be about 10 nm to about 200 nm, about 20 nm to about 200 nm, about 50 nm to about 200 nm, or about 100 nm to about 200 nm. In one or more embodiments, the particle diameter may refer to a value obtained by measuring diameters of about 30 second particles PTC2 randomly selected from an electron micrograph of a positive electrode active material. The plurality of second particles PTC2 may have a uniform (e.g., substantially uniform) particle diameter. The particle diameter of the second particle PTC2 may be smaller than the particle diameter of the first primary particle. For example, the particle diameter of the second particle PTC2 may be about 100 nm smaller than the particle diameter of the first primary particle.

If (e.g., when) the average particle diameters of the first particle and the second particle fall within the foregoing ranges, respectively, and the plurality of second particles have a uniform (e.g., substantially uniform) size, the rechargeable lithium battery including the plurality of second particles may have improved or enhanced charge-discharge capacity and/or low-temperature capacity (e.g., electrical capacity).

The first particle PTC1 may have a sphere (e.g., substantially sphere) shape in which the nano-sized plurality of second particles PTC2 are aggregated. Having the plurality of second particles PTC2 that are closely aggregated with each other, the first particle PTC1 may have the following characteristics. The first particle PTC1 may have a sphere (e.g., substantially sphere) or an oval (e.g., substantially oval) shape. The average particle diameter (D50) of the first particle PTC1 may be about 2 $\mu$m to about 15 $\mu$m. The first particle PTC1 may have a porosity of about 20% to about 40%. Here, porosity ($n$) may be defined as the pore volume ($V_p$) divided by the total volume ($Vt$) of a particle. The span value, obtained by analysis on the first particle PTC1 using a particle size analyzer, may be about 0.3 to about 0.75. The span value is represented by $(D_{90}-D_{10})/D_{50}$. The term "$D_{10}$" as used herein, refers to the average diameter of particles when the cumulative percentage reaches 10 % by volume in the particle size distribution, and the term "$D_{90}$" as used herein, refers to the average diameter of particles when the cumulative percentage reaches 90% by volume in the particle size distribution.

A rechargeable lithium battery including the positive electrode active material according to one or more embodiments of the present disclosure may have improved or enhanced low-temperature characteristics. In one or more embodiments, a discharge capacity at about -20 °C compared with an initial discharge capacity (e.g., discharge capacity at about -20 °C /initial discharge capacity) may be at least about 30%. For example, the discharge capacity at about -20 °C compared with the initial discharge capacity (e.g., discharge capacity at about -20 °C /initial discharge capacity) of the rechargeable lithium battery according to one or more embodiments of the present disclosure may be about 30% to about 100%, about 30% to about 70%, or about 50% to about 65%.

The rechargeable lithium battery including the positive electrode active material according to one or more embodiments of the present disclosure may have improved or enhanced operating voltage. In one or more embodiments, the operating voltage of the rechargeable lithium battery according to one or more embodiments of the present disclosure may range from about 3 V to about 5 V. For example, the operating voltage may range from about 3 V to about 4.5 V or from about 3.5 V to about 4 V.

The rechargeable lithium battery including the positive electrode active material according to one or more embodiments of the present disclosure may have improved or enhanced lifespan characteristics. In one or more embodiments, the rechargeable lithium battery according to one or more embodiments of the present disclosure may have a capacity (e.g., electrical capacity) retention rate of at least about 98% after about 50 times of charging and discharging with a constant current of about 1.0 C at the voltage as described in one or more embodiments. For example, the capacity (e.g., electrical capacity) retention rate may be about 98% to about 100% or about 99.8% to about 100%.

**Positive Electrode Active Material Slurry**

A positive electrode active material slurry according to one or more embodiments of the present disclosure may include the positive electrode active material PTC1, the conductive (e.g., electrically conductive) material CDM, the binder BND, as described in one or more embodiments, and/or a solvent. Hereinafter, for the convenience of description, substantially the same contents as those described with reference to FIGS. 6-7 may be omitted, and the differences are mainly or predominantly described in more detail.

In one or more embodiments, the positive electrode active material slurry may have a viscosity of about 7000 mPa·s or less. For example, the viscosity of the positive electrode active material slurry may be about 1000 mPa·s to about 7000 mPa·s, about 2000 mPa·s to about 6000 mPa·s, or about 3000 mPa·s to about 4000 mPa·s. If (e.g., when) the viscosity of the positive electrode active material slurry falls within the foregoing ranges, a positive electrode active material layer AML1 may be easily bound to a current collector COL1.

For example, if (e.g., when) the first particle PTC1 is a secondary particle, the positive electrode active material slurry according to one or more embodiments of the present disclosure may have a desired or suitable viscosity while containing solids in large amount. For example, the positive electrode active material slurry may contain about 60% to about 70% solids. The total solid content (e.g., amount) may refer to a converted value to percentage of the weight of a solid material, remaining after solvent evaporation (e.g., a dried mixture and current collector), based on the total weight of the current collector with the positive electrode active material slurry being applied in preparation of an electrode. The dried mixture may include the positive electrode active material, the binder, and/or the conductive (e.g., electrically conductive) material. If (e.g., when) the total solid content (e.g., amount) falls within the foregoing range, the first particle PTC1 may have excellent or suitable binding force for an electrode current collector.

The first particle PTC1 may be bound to the current collector COL1 (see FIG. 1), and the binder BND may improve or enhance binding force between the first particle PTC1 and the current collector COL1 (see FIG. 1).

For example, if (e.g., when) the first particle PTC1 is a single particle, the positive electrode active material slurry according to one or more embodiments of the present disclosure may contain a large amount of the binder BND in preparation of a full-cell. For example, because the first particle PTC1 has a small first average particle diameter, the amount of the binder BND in the positive electrode active material layer AML1 may be large in order to secure or provide binding force in a desired or suitable range between the first particle PTC1 and the current collector COL1 (see FIG. 1) in manufacture of the full-cell. For example, the amount of the binder BND may be about 2 wt% to about 5 wt% or about 3 wt% to about 5 wt% based on 100 wt% of the positive electrode active material layer AML1.

For example, if (e.g., when) the first particle PTC1 is a secondary particle, the positive electrode active material slurry according to one or more embodiments of the present disclosure may contain a small amount of the binder BND in the preparation of the full-cell. For example, because the first particle PTC1 has a large first average particle diameter, the amount of the binder BND in the positive electrode active material layer AML1 may be relatively small in order to secure or provide binding force in a desired or suitable range between the first particle PTC1 and the current collector COL1 (see FIG. 1) in the manufacture of the full-cell. For example, the amount of the binder BND may be about 0.5 wt% to about 3 wt% or about 0.5 wt% to about 2 wt% based on 100 wt% of the positive electrode active material layer AML1. For example, in the manufacture of the full-cell, smaller amount of the binder BND may be desired or required if (e.g., when) the first particle PTC1 is a secondary particle than if (e.g., when) the first particle PTC1 is a single particle. In one or more embodiments, resistance (e.g., electrical resistance) (or a degree or occurrence of resistance (e.g., electrical resistance)) of the rechargeable lithium battery, including the first particle PTC1 that is a secondary particle, may be reduced.

**Preparation Method of Positive Electrode Active Material**

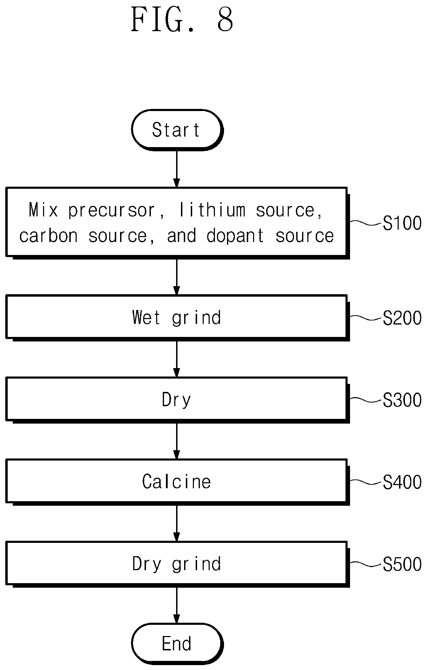

FIG. 8 is a flowchart illustrating a preparation method of a positive electrode active material according to one or more embodiments of the present disclosure. Referring to FIG. 8, the preparation method of a first particle PTC1 according to one or more embodiments of the present disclosure will be described in more detail.

An iron phosphate precursor, a lithium source, a carbon source, and/or a dopant source may be added to a solvent and mixed (S100). For example, the solvent may be water, ethanol, and/or the like. The iron phosphate precursor may be a compound containing both (e.g., simultaneously) iron (Fe) and phosphorus (P) and/or a mixture of an iron (Fe)-containing compound and a phosphorus (P)-containing compound. For example, the iron phosphate precursor may include $FePO_4 \cdot H_2O$ and/or a mixture of $FeSO_4$ and $H_3PO_4$. For example, the iron phosphate precursor may include $FePO_4$ and/or a mixture of $FeSO_4$ and $H_3PO_4$.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from the group consisting of glucose, sucrose, fructose, cellulose, starch, citric acid, polyacrylic acid, polyethylene glycol, and dopamine.

The dopant source may include a dopant metal-containing oxide and/or a dopant metal-containing chloride. For example, the dopant source may include at least one selected from the group consisting of a Mg-containing oxide, a Mg-containing chloride, a Ti-containing oxide, a Ti-containing chloride, a V-containing oxide, and a V-containing chloride in Formula 1. For example, the dopant source may include at least one selected from among the Mg-containing oxide and the Mg-containing chloride, at least one selected from among the Ti-containing oxide and the Ti-containing chloride, and/or at least one selected from among the V-containing oxide and V-containing chloride.

Wet grinding may be performed on the mixture (S200). For the wet grinding, a general wet mill (e.g., a generally used or generally available wet mill) capable of temperature control may be used. For example, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the present disclosure, the wet grinding (S200) may also be omitted. For example, in order to maximize or increase the average particle diameter of the first particle PTC1 to be finally prepared, the wet grinding (S200) of precursor particles may also be omitted.

The solvent may be removed (e.g., dried or evaporated) from the mixture to form or provide a dried mixture (S300).

If (e.g., when) the first particle PTC1 in FIG. 6 is prepared or provided according to one or more embodiments of the present disclosure, the forming of the dried mixture may include performing direct evaporation on the mixture. For example, the direct evaporation may include static drying and/or spray drying.

If (e.g., when) the first particle PTC1 in FIG. 7 is prepared or provided according to one or more embodiments of the present disclosure, the forming of the dried mixture may include performing the spray drying on the mixture. A generally used spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely (e.g., substantially finely) reduced to a size of a primary particle after the wet grinding process, may be aggregated with each other through the spray drying process to thereby form or provide a secondary particle. Therefore, by adjusting the flow rate and/or velocity of carrier gas, temperature, the residence time in a reactor, internal pressure, and/or the like during the spray drying process, the first particle PTC1 may be formed or provided into the secondary particle of a desired or suitable size.

In one or more embodiments, the mixture to be spray-dried may have a total solid content (e.g., amount) (TSC) of about 20% to about 40%. The total solid content (e.g., amount) may refer to a converted value to percentage of the weight of a solid material remaining after solvent evaporation (e.g., dried mixture) based on the total weight of the mixture (e.g., spray liquid). For example, the spray liquid may have a total solid content (e.g., amount) of about 30 wt%.

If (e.g., when) the total solid content (e.g., amount) is less than about 20%, disadvantages of a decrease in an average particle diameter of the first particle PTC1 and/or a reduction of productivity may be caused. If (e.g., when) the total solid content (e.g., amount) is greater than about 40%, adjusting the average particle diameter of the first particle PTC1 may become difficult, and size difference between the first particles PTC1 may increase.

The spray liquid according to one or more embodiments may have a viscosity of about 1500 mPa·s to about 2500 mPa·s having the total solid content (e.g., amount) as described in one or more embodiments. For example, the spray liquid may have a viscosity of about 2000 mPa·s.

In one or more embodiments, an input rate for spray drying may be about 0.1 kg/min to about 0.9 kg/min. The input rate for spray drying may be defined as the weight of a solvent and raw material mixture added per minute. In one or more embodiments, the input rate for spray drying according to one or more embodiments of the present disclosure may be about 0.5 kg/min.

In one or more embodiments, the spray drying may be performed at a temperature of about 100 °C to about 300 °C. For example, the spray drying may be performed at a temperature of about 200 °C to about 300 °C, at a temperature higher than or equal to about 200 °C and lower than or equal to about 300 °C, or at a temperature of about 230 °C to about 270 °C. Spray gas (e.g., air), used for the spray drying, may be injected at a first temperature and discharged at a second temperature. For example, the first temperature may be about 200 °C to about 250 °C. The second temperature may be about 80 °C to about 150 °C.

The spray liquid may have an input pressure of about 0.3 MPa to about 0.7 MPa. For example, the input pressure of the spray liquid may be about 0.5 MPa.

If (e.g., when) the input rate, the input pressure, and the temperature for the spray drying fall within the foregoing ranges, respectively, the first particle PTC1 may have a sphere (e.g., substantially sphere) shape and a desired or suitable porosity.

The spray liquid for the spray drying may have a flow velocity of about 30 mL/min to about 80 mL/min. If (e.g., when) the flow velocity is less than about 30 mL/min, disadvantages of nozzle clogging, reduced productivity, and/or the like may be caused. If (e.g., when) the flow velocity is greater than about 80 mL/min, due to moisture condensation in the spray-drying device, the mixture may not be dried completely (e.g., substantially completely). The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C or about 600 °C to about 800 °C. The execution time of the calcination process may be about 4 hours to about 20 hours or about 6 hours to about 12 hours. As the dried mixture is calcined, the first particle PTC1 containing the compound represented by Formula 1, as described in one or more embodiments, may be formed or provided.

Dry grinding may be performed on the calcined first particle PTC1 (S500). The calcined mixture may be ground using an air jet mill and/or the like.

In preparation of the first particle PTC1 in FIG. 6, according to one or more embodiments of the present disclosure, the calcined mixture may be ground at a rotation speed of at least about 7000 rpm. For example, the calcined mixture may be ground at a rotation speed of about 7000 rpm to about 10000 rpm or about 7500 rpm to about 9000 rpm. Therefore, the first particle PTC1 may have a form of a single particle as illustrated in FIG. 6.

In preparation of the first particle PTC1 in FIG. 7, according to one or more embodiments of the present disclosure, the calcined mixture may be ground at a rotation speed of about 0 rpm to about 7000 rpm. For example, the calcined mixture

may be ground at a rotation speed of about 4000 rpm to about 7000 rpm, about 4000 rpm to about 6000 rpm, or about 4500 rpm to about 5000 rpm. Unlike the preparation of the positive electrode active material in FIG. 6, the grinding after calcination (S500) may be performed under relatively mild conditions. In the preparation of the positive electrode active material in FIG. 7, for example, the dry grinding (S500) may also be omitted. If (e.g., when) the rotation speed in the grinding (S500) falls within the foregoing ranges, the first particle PTC1 may be maintained to have a form of a secondary particle. Therefore, the first particle PTC1 may have a form of the secondary particle as illustrated in FIG. 7.

In the preparation of the first particle PTC1 in FIG. 7, according to one or more embodiments of the present disclosure, a carbon source may be introduced to an iron phosphate precursor to form or provide a carbon coating layer uniformly (e.g., substantially uniformly) on surfaces of primary particles. Thereafter, the primary particles may be closely aggregated through the spray drying to form or provide a substantially dense sphere-shaped (e.g., substantially sphere-shaped) secondary particle. As a result, the first particle PTC1 may include the stable carbon coating layer in the outside and inside of the first particle PTC1 and may thus have a relatively high carbon content (e.g., amount). Due to the high carbon content (e.g., amount) of the first particle PTC1 in FIG. 7, the positive electrode active material layer AML1 may have improved or enhanced conductivity (e.g., electrical conductivity).

Analysis on a carbon element according to one or more embodiments of the present disclosure may be performed using an Elementar Micro Cube elemental analyzer. The set or specific operation method and conditions are as follows. A sample of 1 to 2 mg may be weighed in a tin cup, loaded in an automatic sampling tray, and transferred into a combustion tube through a ball valve, and the combustion may be carried out at a combustion temperature of about 1000 °C. Subsequently, reduction of the combustion gas using reduced copper may be carried out to form or provide carbon dioxide. Carbon dioxide may be detected using a thermal conductivity detector (TCD).

Scanning electron microscope-energy dispersive X-ray spectroscopy (SEM-EDS) and quantitative analyses on a particle surface may be conducted to measure the carbon content (e.g., amount) according to one or more embodiments of the present disclosure. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, Examples and Comparative Examples of the present disclosure are described in more detail. However, the following examples are only examples of the present disclosure, and embodiments of the present disclosure are not limited to the following examples.

**Example 1: Preparation of First Particle in A Form of Single Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.004. 10 wt% of glucose was further added to the mixture. Wet grinding was performed on the mixture by ball milling. The mixture was dried over evaporation on a tray by heating, and then dried in a vacuum oven at about 85 °C for about 4 hours. The dried mixture was calcined in a nitrogen atmosphere at about 650 °C and for about 10 hours. The calcined product was ground at a rotation speed of about 8000 rpm to obtain a first particle in the form of a single particle. The average size of the resultant first particle was about 300 nm to about 400 nm. The formula of the resultant first particle was $LiFe_{0.9935}Mg_{0.0025}Ti_{0.004}PO_4$.

**Example 2: Preparation of First Particle in A Form of Single Particle**

An iron phosphate precursor ($Fe_1PO_4 \cdot H_2O$), lithium carbonate, magnesium dioxide, titanium dioxide, and vanadium dioxide were mixed in a molar ratio of Fe:Li:Mg:Ti:V of about 1:1.03:0.0025:0.004:0.002, and the resultant first particle was prepared in substantially the same manner as that of Example 1, except for the formula thereof being $LiFe_{0.9915}Mg_{0.0025}Ti_{0.004}V_{0.002}PO_4$.

**Example 3: Preparation of First Particle in A Form of Secondary Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.0025:0.002. 10 wt% of glucose was further added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle. The average size of the resultant second particle was about 100 nm to about 200 nm. The formula of the resultant first particle was $LiFe_{0.9955}Mg_{0.0025}Ti_{0.002}PO_4$.

**Example 4: Preparation of First Particle in A Form of Secondary Particle**

An iron phosphate precursor ($Fe_1PO_4 \cdot H_2O$), lithium carbonate, magnesium dioxide, and titanium dioxide were mixed in a molar ratio of about 1:1.03:0.0025:0.004, and the first particle was prepared in substantially the same manner as that of Example 3, except for the formula thereof being $LiFe_{0.9935}Mg_{0.0025}Ti_{0.004}PO_4$.

**Example 5: Preparation of First Particle in A Form of Secondary Particle**

An iron phosphate precursor ($Fe_1PO_4 \cdot H_2O$), lithium carbonate, magnesium dioxide, titanium dioxide, and vanadium dioxide were mixed in a molar ratio of Fe:Li:Mg:Ti:V of about 1:1.03:0.0025:0.004:0.001, and the first particle was prepared in substantially the same manner as that of Example 3, except for the formula thereof being $LiFe_{0.9925}Mg_{0.0025}Ti_{0.004}V_{0.001}PO_4$.

**Example 6: Preparation of First Particle in A Form of Secondary Particle**

An iron phosphate precursor ($Fe_1PO_4 \cdot H_2O$), lithium carbonate, magnesium dioxide, titanium dioxide, and vanadium dioxide were mixed in a molar ratio of Fe:Li:Mg:Ti:V of about 1:1.03:0.0025:0.004:0.002, and the first particle was prepared in substantially the same manner as that of Example 3, except for the formula thereof being $LiFe_{0.9915}Mg_{0.0025}Ti_{0.004}V_{0.002}PO_4$.

**Comparative Example 1: Preparation of First Particle in A Form of Single Particle**

An iron phosphate precursor ($Fe_1PO_4 \cdot H_2O$) and lithium carbonate were mixed in a molar ratio of Fe:Li of about 1:1.03, and the first particle was prepared in substantially the same manner as that of Example 1 except for the formula thereof being $LiFePO_4$.

**Comparative Example 2: Preparation of First Particle in A Form of Single Particle**

An iron phosphate precursor ($Fe_1PO_4 \cdot H_2O$), lithium carbonate, and vanadium dioxide were mixed in a molar ratio of Fe:Li:V of about 1:1.03:0.02, and the first particle was prepared in substantially the same manner as that of Example 1, except for the formula thereof being $LiFe_{0.998}V_{0.002}PO_4$.

**Comparative Example 3: Preparation of First Particle in A Form of Single Particle**

An iron phosphate precursor ($Fe_1PO_4 \cdot H_2O$), lithium carbonate, and magnesium dioxide were mixed in a molar ratio of Fe:Li:Mg of about 1:1.03:0.0025, and the first particle was prepared in substantially the same manner as that of Example 1, except for the formula thereof being $LiFe_{0.9975}Mg_{0.0025}PO_4$.

**Comparative Example 4: Preparation of First Particle in A Form of Single Particle**

An iron phosphate precursor ($Fe_1PO_4 \cdot H_2O$), lithium carbonate, and titanium dioxide were mixed in a molar ratio of Fe:Li:Ti of about 1:1.03:0.002, and the first particle was prepared in substantially the same manner as that of Example 1, except for the formula thereof being $LiFe_{0.998}Ti_{0.002}PO_4$.

**Comparative Example 5: Preparation of First Particle in A Form of Single Particle**

An iron phosphate precursor ($Fe_1PO_4 \cdot H_2O$), lithium carbonate, and titanium dioxide were mixed in a molar ratio of Fe:Li:Ti of about 1:1.03:0.004, and the first particle was prepared in substantially the same manner as that of Example 1, except for the formula thereof being $LiFe_{0.996}Ti_{0.004}PO_4$.

**Comparative Example 6: Preparation of First Particle in A Form of Single Particle**

An iron phosphate precursor ($Fe_1PO_4 \cdot H_2O$), lithium carbonate, titanium dioxide, and vanadium dioxide were mixed in a molar ratio of Fe:Li:Ti:V of about 1:1.03:0.004:0.002, and the first particle was prepared in substantially the same manner as that of Example 1, except for the formula thereof being $LiFe_{0.996}Ti_{0.004}V_{0.002}PO_4$.

**Comparative Example 7: Preparation of First Particle in A Form of Secondary Particle**

An iron phosphate precursor ($Fe_1PO_4 \cdot H_2O$), lithium carbonate, and titanium dioxide were mixed in a molar ratio of Fe:Li:Ti of about 1:1.03:0.002, and the first particle was prepared in substantially the same manner as that of Example 3, except for the formula thereof being $LiFe_{0.998}Ti_{0.002}PO_4$.

**Comparative Example 8: Preparation of First Particle in A Form of Single Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.005:0.005, and the first particle was prepared in substantially the same manner as that of Example 1, except for the formula thereof being $LiFe_{0.99}Mg_{0.005}Ti_{0.005}PO_4$.

**Comparative Example 9: Preparation of First Particle in A Form of Secondary Particle**

An iron phosphate precursor ($Fe_1PO_4 \cdot H_2O$), lithium carbonate, magnesium dioxide, and titanium dioxide were mixed in a molar ratio of Fe:Li:Mg:Ti of about 1:1.03:0.005:0.005, and the first particle was prepared in substantially the same manner as that of Example 3, except for the formula thereof being $LiFe_{0.99}Mg_{0.005}Ti_{0.005}PO_4$.

**Comparative Example 10: Preparation of First Particle in A Form of Single Particle**

An iron phosphate precursor ($Fe_1PO_4 \cdot H_2O$), lithium carbonate, magnesium dioxide, titanium dioxide, and vanadium dioxide were mixed in a molar ratio of Fe:Li:Mg:Ti:V of about 1:1.03:0.0025:0.005:0.001, and the first particle was prepared in substantially the same manner as that of Example 1, except for the formula thereof being $LiFe_{0.9915}Mg_{0.0025}Ti_{0.005}V_{0.001}PO_4$.

**Comparative Example 11: Preparation of First Particle in A Form of Secondary Particle**

An iron phosphate precursor ($Fe_1PO_4 \cdot H_2O$), lithium carbonate, magnesium dioxide, titanium dioxide, and vanadium dioxide were mixed in a molar ratio of Fe:Li:Mg:Ti:V of about 1:1.03:0.0015:0.005:0.001, and the first particle was prepared in substantially the same manner as that of Example 3, except for the formula thereof being $LiFe_{0.9925}Mg_{0.0015}Ti_{0.005}V_{0.001}PO_4$.

**Preparation of Positive Electrode**

95 wt% of a final positive electrode active material, 3 wt% of a polyvinylidene fluoride binder, and 2 wt% of a carbon black conductive (e.g., electrically conductive) material were mixed in an N-methylpyrrolidone solvent to prepare a positive electrode active material slurry. The positive electrode active material slurry was applied to an aluminium current collector and dried, and then rolling was performed to prepare a positive electrode.

**Manufacture of Rechargeable Lithium Battery**

The prepared positive electrode and a lithium metal counter electrode, as a counter electrode, were used to prepare a 2032-type or -kind coin half-cell. A separator (thickness: about 16 μm) of a porous polyethylene (PE) film was interposed or provided between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

The details of Examples 1 to 6 and Comparative Examples 1 to 11 are illustrated in Table 1.

Table 1

| Classification | Form | Doping amount of Mg/Ti/V (ppm) | Doped Mg (mol%) | Doped Ti (mol%) | Doped V (mol%) | z/b | y/b |
|---|---|---|---|---|---|---|---|
| Example 1 | Single particle | 600/2000/ 0 | 0.25 | 0.4 | 0 | z>b | y>b |
| Example 2 | Single particle | 600/2000/ 1000 | 0.25 | 0.4 | 0.2 | 2 | 1.25 |

(continued)

| Classification | Form | Doping amount of Mg/Ti/V (ppm) | Doped Mg (mol%) | Doped Ti (mol%) | Doped V (mol%) | z/b | y/b |
|---|---|---|---|---|---|---|---|
| Example 3 | Secondar y particle | 600/1000/ 0 | 0.25 | 0.2 | 0 | z>b | y>b |
| Example 4 | Secondar y particle | 600/2000/ 0 | 0.25 | 0.4 | 0 | z>b | y>b |
| Example 5 | Secondar y particle | 600/2000/ 500 | 0.25 | 0.4 | 0.1 | 4 | 2.5 |
| Example 6 | Secondar y particle | 600/2000/ 1000 | 0.25 | 0.4 | 0.2 | 2 | 1.25 |
| Comparative Example 1 | Single particle | 0/0/0 | 0 | 0 | 0 | - | - |
| Comparative Example 2 | Single particle | 0/0/1000 | 0 | 0 | 0.2 | 0 | 0 |
| Comparative Example 3 | Single particle | 600/0/0 | 0.25 | 0 | 0 | - | y>b |
| Comparative Example 4 | Single particle | 0/1000/0 | 0 | 0.2 | 0 | z>b | - |
| Comparative Example 5 | Single particle | 0/2000/0 | 0 | 0.4 | 0 | z>b | - |
| Comparative Example 6 | Single particle | 0/2000/10 00 | 0 | 0.4 | 0.2 | 2 | 0 |
| Comparative Example 7 | Secondar y particle | 0/1000/0 | 0 | 0.2 | 0 | z>b | - |
| Comparative Example 8 | Single particle | 1200/250 0/0 | 0.5 | 0.5 | 0 | z>b | y>b |
| Comparative Example 9 | Secondar y particle | 1200/250 0/0 | 0.5 | 0.5 | 0 | z>b | y>b |
| Comparative Example 10 | Single particle | 600/2500/ 500 | 0.25 | 0.5 | 0.1 | 5 | 2.5 |
| Comparative Example 11 | Secondar y particle | 360/2500/ 500 | 0.15 | 0.5 | 0.1 | 5 | 1.5 |

**Evaluation Example 1: Surface Analysis of Positive Electrode Active Material**

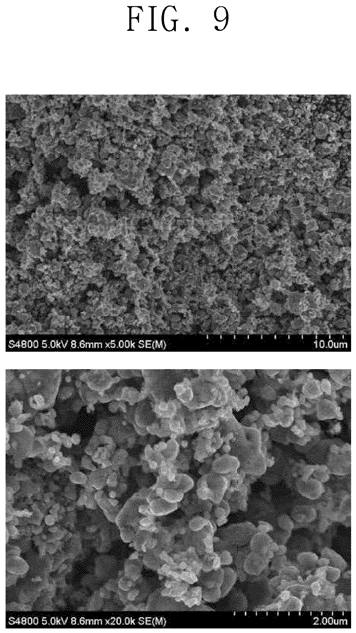

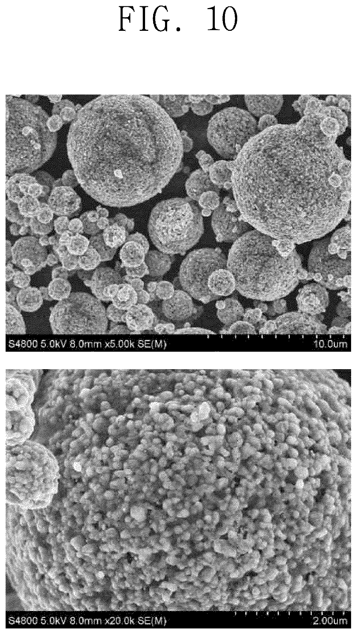

FIG. 9 illustrates a scanning electron microscope (SEM) image of the first particle prepared according to Example 2. FIG. 10 illustrates a SEM image of the first particle prepared according to Example 6. Referring to FIG. 9, it can be seen that the first particle according to Example 2 of the present disclosure has a form of a fine single particle. Referring to FIG. 10, it can be seen that the first particle according to Example 6 of the present disclosure has a form of a sphere-shaped (e.g., substantially sphere-shaped) secondary particle in which a plurality of primary particles are aggregated. It can be seen that the second particle PTC2 according to Example 6 of the present disclosure has a form of a fine nano-sized single particle. Referring to FIGS. 9 and 10, the primary particle PTC2 according to Example 6 was smaller than the primary particle according to Example 2 and was uniform (e.g., substantially uniform).

**Evaluation Example 2: Evaluation on Active Material**

The pellet densities (PD) and carbon contents (e.g., amounts) of the positive electrode active materials according to Examples 1 to 6 and Comparative Examples 1 to 11 were measured, and the results are listed in Table 2. The pellet density was measured and recorded within the range of 3.0000 g (with an error margin of $\pm$ 0.0004 g) for the positive electrode active material. The positive electrode active material was pressed using a 13 mm KBr Pellet Die at 4 tons of pressure for 30 seconds, after which the height reduction was measured and the weight per volume was determined.

Table 2

| Classification | Pellet density (g/cc) | Carbon content (e.g., amount) (wt%) |
|---|---|---|
| Example 1 | 2.41 | 1.52 |
| Example 2 | 2.43 | 1.53 |
| Example 3 | 2.44 | 1.83 |
| Example 4 | 2.45 | 1.84 |
| Example 5 | 2.43 | 1.81 |
| Example 6 | 2.42 | 1.85 |
| Comparative Example 1 | 2.40 | 1.50 |
| Comparative Example 2 | 2.41 | 1.52 |
| Comparative Example 3 | 2.42 | 1.53 |
| Comparative Example 4 | 2.43 | 1.48 |
| Comparative Example 5 | 2.41 | 1.47 |
| Comparative Example 6 | 2.42 | 1.51 |
| Comparative Example 7 | 2.46 | 1.81 |
| Comparative Example 8 | 2.43 | 1.47 |
| Comparative Example 9 | 2.41 | 1.84 |
| Comparative Example 10 | 2.40 | 1.46 |
| Comparative Example 11 | 2.39 | 1.80 |

Referring to Table 2, it can be seen that the positive electrode active materials according to Examples 1 to 6 of the present disclosure have substantially similar or higher pellet densities and substantially similar or larger carbon contents (e.g., amounts) to/than the positive electrode active materials according to Comparative Examples 1 to 11. For example, it can be seen that the positive electrode active materials according to Examples 1 and 2 of the present disclosure have substantially similar or higher pellet densities and larger carbon contents (e.g., amounts) to/than the positive electrode active materials according to Comparative Examples 1 to 6, 8, and 10. The positive electrode active material according to Example 2 has a higher pellet density and larger carbon content (e.g., amount) than the positive electrode active material according to Example 1. It can be seen that the positive electrode active materials according to Examples 3 to 6 of the present disclosure have substantially similar or higher pellet densities and larger carbon contents (e.g., amounts) to/than the positive electrode active materials according to Comparative Examples 7, 9, and 11. The positive electrode active material according to Example 6 has a larger carbon content (e.g., amount) than the positive electrode active materials according to Examples 3 and 4. It can be seen that the positive electrode active materials according to Examples 5 and 6 have higher carbon contents (e.g., amounts) than the positive electrode active material according to Example 2.

**Evaluation Example 3: Evaluation on Rechargeable Lithium Battery**

**Characteristics**

Characteristics of rechargeable lithium batteries prepared using the positive electrode active materials according to Examples 1 to 6 and Comparative Examples 1 to 11 were evaluated.

An initial charging and discharging cycle of the rechargeable lithium battery was performed by initially charging under conditions of a constant current (0.1 C) and a constant voltage (3.8 V) (cut-off 0.05C), followed by a rest for about 10 minutes and then discharging with a constant current (0.1 C) until a voltage reached 3.0 V. Thereafter, the charging and discharging cycles were repeated 50 times at about 25 °C under about 1.0 C/1.0 C conditions. In one or more embodiments, a coin cell was additionally manufactured and the batteries were initially charged at a constant current of 0.1 C and a constant voltage (3.8 V) (cut-off 0.05C), and after 10 minutes of rest, discharged up to 3.0 V at a constant current of 0.1 C and additionally charged, and measure the capacity at about -20 °C. The results of evaluating the rechargeable lithium battery characteristics are illustrated in Table 3.

Table 3

| Classification | Charge amount (mAh/g) at 3.8 V | Discharge amount (mAh/g) at 3.8 V | Efficiency (%) at 3.8 V | Capacity (mAh/g) at -20 °C | Lifespan (%) at 3.8 V/50 cycles |
|---|---|---|---|---|---|
| Example 1 | 165.2 | 155.8 | 94.3 | 55 | 98.1 |
| Example 2 | 164.9 | 155.9 | 94.5 | 58 | 98.1 |
| Example 3 | 165.6 | 164.0 | 99.0 | 94 | 99.8 |
| Example 4 | 165.4 | 163.8 | 99.0 | 92 | 100.1 |
| Example 5 | 165.2 | 164.0 | 99.3 | 93 | 100.2 |
| Example 6 | 164.9 | 164.1 | 99.5 | 101 | 100.2 |
| Comparative Example 1 | 164.1 | 156.1 | 95.1 | 43 | 94.3 |
| Comparative Example 2 | 164.0 | 158.6 | 96.7 | 48 | 94.5 |
| Comparative Example 3 | 163.5 | 155.8 | 95.3 | 45 | 95.6 |
| Comparative Example 4 | 163.5 | 155.0 | 94.8 | 56 | 96.9 |
| Comparative Example 5 | 164.3 | 156.2 | 95.1 | 58 | 97.2 |
| Comparative Example 6 | 163.8 | 155.9 | 95.2 | 63 | 97.5 |
| Comparative Example 7 | 165.5 | 164.2 | 99.2 | 95 | 99.6 |
| Comparative Example 8 | 162.3 | 152.9 | 94.2 | 41 | 95.2 |
| Comparative Example 9 | 163.5 | 160.4 | 98.1 | 89 | 97.1 |
| Comparative Example 10 | 161.2 | 151.9 | 94.2 | 42 | 94.8 |
| Comparative Example 11 | 162.8 | 159.7 | 98.1 | 85 | 96.3 |

Referring to Table 3, it can be seen that the rechargeable lithium batteries according to Examples 1 to 6 of the present disclosure have excellent or suitable low-temperature capacities and lifespan characteristics. For example, it can be seen that the rechargeable lithium batteries according to Examples 1 and 2 of the present disclosure have substantially similar or higher capacities at about -20 °C and longer lifespans to/than the rechargeable lithium batteries according to Comparative Examples 1 to 6, 8, and 10. The rechargeable lithium battery according to Example 2 has a higher capacity at about -20 °C than the rechargeable lithium battery according to Example 1. It can be seen that the rechargeable lithium batteries according to Examples 3 to 6 of the present disclosure have substantially similar or higher capacities at about -20 °C and longer lifespans to/than the rechargeable lithium batteries according to Comparative Examples 7, 9, and 11. The rechargeable lithium batteries according to Examples 5 and 6 have higher capacities at about -20 °C and longer lifespans than the rechargeable lithium batteries according to Examples 3 and 4. In one or more embodiments, the rechargeable lithium batteries according to Examples 5 and 6 have higher capacities at about -20 °C and longer lifespans than the rechargeable lithium battery according to Example 2.

In one or more embodiments, it can be seen that the rechargeable lithium batteries according to Examples 3 to 6 have higher charge amounts than the rechargeable lithium batteries according to Examples 1 and 2, and therefore, the rechargeable lithium batteries according to Examples 3 to 6 have lower resistance (e.g., electrical resistance).

A positive electrode active material according to one or more embodiments of the present disclosure may have improved or enhanced electrical conductivity, mixture density (e.g., compression density and/or pellet density), capacity (e.g., electrical capacity), and energy density. A rechargeable lithium battery according to one or more embodiments of the present disclosure may have relatively high operating voltage and charge-discharge efficiency and improved or enhanced low-temperature and lifespan characteristics.

Although one or more embodiments of the present disclosure have been described, it should be understood that the present disclosure should not be limited to these embodiments but one or more suitable changes and modifications can be made by one ordinary skilled in the art within the scope of the present disclosure as hereinafter claimed and equivalents thereof. Therefore, it will be understood that one or more embodiments described above are just illustrative but not limitative in all aspects.

**Claims**

1. A positive electrode active material, comprising:

   a first particle comprising a compound represented by Formula 1 and having a first average particle diameter, wherein, in Formula 1, $1 < z/b < 5$:

   Formula 1 $\qquad$ $Li_aFe_xMg_yTi_zV_bPO_{4-c}$

   wherein, in Formula 1, $0.8 < a \leq 1.2$, $0.850 \leq x \leq 0.997$, $0.001 \leq y \leq 0.05$, $0.001 \leq z \leq 0.05$, $0 \leq b \leq 0.05$, $0 \leq c \leq 0.05$, and $x + y + z + b = 1$.

2. The positive electrode active material as claimed in claim 1, wherein, in Formula 1, $y/b > 1$.

3. The positive electrode active material as claimed in claim 1 or claim 2, wherein, in Formula 1, $1 < z/y < 5$, and an average oxidation number of Mg and Ti satisfies Expression 1:

   Expression 1

   $$2.5 < (y \times 2 + z \times 4) / (y + z) < 3.5.$$

4. The positive electrode active material as claimed in any one of claims 1 to 3, wherein y is about 0.002 to about 0.003,

   z is about 0.0035 to about 0.0045, and
   b is about 0.001 to about 0.003.

5. The positive electrode active material as claimed in any one of claims 1 to 4, wherein the first particle comprises a coating layer containing carbon, and
   an amount of carbon in the first particle is about 1.5 wt% to about 2.5 wt%.

6. The positive electrode active material as claimed in any one of claims 1 to 5, wherein the first particle is a single particle, and
   the first average particle diameter is about 500 nm to about 2.5 $\mu$m.

7. The positive electrode active material as claimed in any one of claims 1 to 5, wherein the first particle comprises a plurality of second particles aggregated with each other, and
   the first average particle diameter is about 3 $\mu$m to about 10 $\mu$m.

8. The positive electrode active material as claimed in claim 7,

   wherein each of the plurality of second particles is a primary particle, and
   each of the plurality of second particles has a particle diameter of about 200 nm or less.

9. The positive electrode active material as claimed in claim 7 or claim 8,

   wherein the first particle further comprises a grain boundary coating layer on an interface between the plurality of second particles, and
   the grain boundary coating layer contains carbon.

10. The positive electrode active material as claimed in any one of claims 7 to 9, wherein the first particle has a porosity of about 20% to about 40%.

11. The positive electrode active material as claimed in any one of claims 7 to 10, wherein a span value, obtained by analysis on the first particle using a particle size analyzer, is about 0.3 to about 0.75.

12. The positive electrode active material as claimed in any one of claims 1 to 11, wherein a pellet density of the positive electrode active material is about 2.0 g/cc to about 2.5 g/cc.

13. A positive electrode for a rechargeable lithium battery, comprising:

   a positive electrode current collector; and
   a positive electrode active material layer on the positive electrode current collector,
   wherein the positive electrode active material layer comprises the positive electrode active material as claimed in any one of claims 1 to 12, a conductive material, and a binder.

14. The positive electrode as claimed in claim 13, wherein an amount of the binder is about 0.5 wt% to about 5 wt% based on 100 wt% of the positive electrode active material layer.

15. A rechargeable lithium battery, comprising:

   a positive electrode, a negative electrode, a separator, and an electrolyte solution,
   wherein the positive electrode comprises the positive electrode active material as claimed in any one of claims 1 to 12.

# FIG. 1

# FIG. 2

FIG. 3

100

11

12

22

10

40

30

20

21

50

EP 4 641 692 A1

# FIG. 4

23

# FIG. 5

100

50

40

10
30
20

70

FIG. 6

FIG. 7

# FIG. 8

```
              ┌─────────┐
              │  Start  │
              └─────────┘
                   │
                   ▼
   ┌────────────────────────────────────┐
   │  Mix precursor, lithium source,    │──── S100
   │  carbon source, and dopant source  │
   └────────────────────────────────────┘
                   │
                   ▼
   ┌────────────────────────────────────┐
   │             Wet grind              │──── S200
   └────────────────────────────────────┘
                   │
                   ▼
   ┌────────────────────────────────────┐
   │               Dry                  │──── S300
   └────────────────────────────────────┘
                   │
                   ▼
   ┌────────────────────────────────────┐
   │             Calcine                │──── S400
   └────────────────────────────────────┘
                   │
                   ▼
   ┌────────────────────────────────────┐
   │             Dry grind              │──── S500
   └────────────────────────────────────┘
                   │
                   ▼
              ┌─────────┐
              │   End   │
              └─────────┘
```

FIG. 9

# FIG. 10

Europäisches
Patentamt

European
Patent Office

Office européen
des brevets

# EUROPEAN SEARCH REPORT

**Application Number**

EP 25 16 8828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/230770 A1 (OYA MASAYUKI [JP] ET AL) 5 September 2013 (2013-09-05) * [0208]: example 6 * ----- | 1-15 | INV. H01M4/587 ADD. H01M10/052 |
| A | CN 101 186 289 A (WEIJIE YU [CN]) 28 May 2008 (2008-05-28) * p. 5: example 1 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 4 September 2025 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 8828

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2025

| Patent document cited in search report | Publication date | Patent family member(s) | Publication date |
|---|---|---|---|
| US 2013230770 A1 | 05-09-2013 | CN 103262326 A<br>JP WO2012067102 A1<br>KR 20130143083 A<br>US 2013230770 A1<br>WO 2012067102 A1 | 21-08-2013<br>12-05-2014<br>30-12-2013<br>05-09-2013<br>24-05-2012 |
| CN 101186289 A | 28-05-2008 | NONE | |

EPO FORM P0459

For more details about this annex : see Official Journal of the European Patent Office, No. 12/82